# EUROPÄISCHE PATENTSCHRIFT

(11) **EP 3 184 277 B1**
(45) Veröffentlichungstag und Bekanntmachung des Hinweises auf die Patenterteilung: **06.12.2017**
(21) Anmeldenummer: 15202317.2
(22) Anmeldetag: 23.12.2015
(51) Int. Cl.: B29C 45/00, B29L 31/56

(54) **VERFAHREN ZUR HERSTELLUNG EINES HOLZPARTIKEL ENTHALTENDEN KUNSTSTOFFKORKENS SOWIE KUNSTSTOFFKORKEN ENTHALTEND HOLZPARTIKEL**
METHOD FOR PRODUCING A PLASTIC CORK CONTAINING WOOD PARTICLES AND PLASTIC CORKS CONTAINING WOOD PARTICLES
PROCEDE DE FABRICATION D'UN BOUCHON SYNTHETIQUE CONTENANT DES PARTICULES DE BOIS ET BOUCHON SYNTHETIQUE CONTENANT DES PARTICULES DE BOIS

(43) Veröffentlichungstag der Anmeldung: 28.06.2017
(73) Patentinhaber: Müller, Josef, 84428 Buchbach (DE)
(72) Erfinder: Müller, Josef, 84428 Buchbach (DE)
(74) Vertreter: Weickmann & Weickmann PartmbB

(56) Entgegenhaltungen:
- US-A1- 2014 224 759

## Beschreibung

### I. Anwendungsgebiet

Die vorliegende Erfindung betrifft ein Verfahren zur Herstellung eines Holzpartikel enthaltenden Kunststoffkorkens sowie einen Kunststoffkorken enthaltend Holzpartikel. Der erfindungsgemäße Kunststoffkorken dient insbesondere dem Verschluss von Weinflaschen. Die Holzpartikel bewirken eine Entfernung oder zumindest eine Reduzierung sogenannter Weinfehler und/oder eine Aromatisierung des Weins.

### II. Technischer Hintergrund

Aus Kunststoff hergestellte Korken sind als Ersatz für Naturkorken zum Verschließen von Weinflaschen bekannt. Aus der DE 1 877 372 U ist beispielsweise ein Korken aus geschäumtem Kunststoff bekannt, dem ein Füllstoff in Form von Holzmehl zugesetzt sein kann.

Darüber hinaus ist bekannt, Weine in Holzfässern zu deren Aromatisierung zu lagern bzw. auszubauen. Die Aromatisierung von bereits in Flaschen abgefülltem Wein mit Hilfe von Holz wurde in der DE 10 2012 107 622 B3 vorgeschlagen. Dort gerät der Wein bei liegender Weinflasche in Kontakt mit einer Holzlinse, die beispielsweise in einen Schraubverschluss der Flasche integriert ist.

Der Kontakt von geeignetem Holz mit Wein kann neben der Aromatisierung auch eine Entfernung oder Reduzierung sogenannter Weinfehler bewirken. Bei Weinfehlern handelt es sich um unerwünschte Geschmacks-, Geruchs- oder optische Eindrücke im Wein. Sie können entweder bei der Produktion entstehen, bei der Lagerung oder durch externe Materialien in den Wein eingebracht werden. Typische Weinfehler sind Weintrübungen, Geruchs- und Geschmacksfehler durch mikrobiologische Stoffwechselprodukte sowie chemisch verursachte Farb-, Geruchs- und Geschmacksfehler.

Die Entfernung von Weinfehlern und/oder die Aromatisierung eines Weines mittels Holz in einer Flasche, die mit einem wie ein Naturkorken aussehenden Korken verschlossen ist, ist bislang nicht möglich.

### III. Darstellung der Erfindung

### a) Technische Aufgabe

Es ist daher die Aufgabe der vorliegenden Erfindung, ein Verfahren zur Herstellung eines Holzpartikel enthaltenden Kunststoffkorkens sowie einen Holzpartikel enthaltenden Kunststoffkorken zur Verfügung zu stellen, das bzw. der es ermöglicht, Weinfehler in einem in einer Flasche abgefüllten Wein durch Kontakt mit Holz zumindest zu reduzieren und/oder den Wein zu aromatisieren und gleichzeitig den Kunststoffkorken so aussehen zu lassen wie einen aus natürlichem Kork bestehenden Korken.

### b) Lösung der Aufgabe

Diese Aufgabe wird mittels eines Verfahrens mit den Merkmalen des Anspruchs 1 bzw. mittels eines Kunststoffkorkens mit den Merkmalen des Anspruchs 10 gelöst. Weitere Ausgestaltungen der vorliegenden Erfindungen ergeben sich aus den Unteransprüchen.

Erfindungsgemäß wird ein Verfahren zur Herstellung eines Holzpartikel enthaltenden Kunststoffkorkens aus einer fließfähigen Kunststoffmasse vorgeschlagen, die durch Schmelzen eines Kunststoffrohmaterials gewonnen wird. Bei dem Kunststoffrohmaterial kann es sich beispielsweise um schüttfähiges Granulat handeln. Der Kunststoffkorken wird mittels des an sich bekannten Spritzgießens oder Extrudierens aus der Kunststoffmasse geformt. Vor dem Schmelzen des Kunststoffrohmaterials oder vor dem Formen der geschmolzenen Kunststoffmasse in die Form des fertigen Kunststoffkorkens wird das Kunststoffrohmaterial oder die Kunststoffmasse mit geometrisch flachen Holzpartikelplättchen vermischt.

Das Vermischen der geometrisch flachen Holzpartikelplättchen mit dem Kunststoffrohmaterial oder der Kunststoffmasse bewirkt, dass zumindest einige der flachen Holzpartikelplättchen an der Oberfläche des fertigen Kunststoffkorkens sichtbar sind. Die an einer der Stirnseiten des Kunststoffkorkens sichtbaren Holzpartikelplättchen können somit bei liegender Weinflasche mit dem Wein in Kontakt kommen und dadurch Weinfehlern entgegen wirken und/oder den Wein aromatisieren. Gleichzeitig bilden die an der Oberfläche des Kunststoffkorkens sichtbaren flachen Holzpartikelplättchen eine Oberflächenstruktur, die derjenigen eines Naturkorkens optisch ähnelt.

Die geometrisch flachen Holzpartikelplättchen weisen eine Länge, eine Breite und eine Dicke auf. Geometrisch "flach" im Sinne der vorliegenden Erfindung bedeutet insbesondere, dass die Dicke 50% oder weniger, vorzugsweise 25% oder weniger, der kleineren der beiden anderen Abmessungen beträgt, die von der Länge und der Breite gebildet werden. Als besonders vorteilhafte Abmessungen der flachen Holzpartikelplättchen haben sich eine Länge von 1,0-5,0 mm, eine Breite von 0,5-2,0 mm und eine Dicke von 0,2-0,5 mm erwiesen.

Das Vermischen der flachen Holzpartikelplättchen mit dem Kunststoffrohmaterial oder der Kunststoffmasse kann derart erfolgen, dass sie 5 bis 70 Vol%, vorzugsweise 30 bis 50 Vol%, des fertigen Kunststoffkorkens ausmachen.

Für den Vorgang des Entfernens oder Reduzierens von Weinfehlern und/oder der Aromatisierung des Weines durch den Kontakt mit den flachen Holzpartikelplättchen ist es vorteilhaft, die Holzpartikelplättchen vor dem Vermischen mit dem Kunststoffrohmaterial oder mit der Kunststoffmasse zu entfeuchten. Das Entfeuchten kann durch Pressen der flachen Holzpartikelplättchen und/oder durch eine Wärmebehandlung der flachen Holzpartikelplättchen erfolgen.

Als vorteilhaft hat sich die Wärmebehandlung der Holzpartikelplättchen durch Erhitzen in einem Ofen oder in einer sonstigen Luftkammer herausgestellt, die 140-480°C heiße Luft, vorzugsweise 160-200°C heiße Luft, enthält. Bei diesen Temperaturen werden die flachen Holzpartikelplättchen mehr oder weniger angeröstet, wodurch eine mehr oder weniger starke Aromatisierung des Weins in der mit dem erfindungsgemäßen Kunststoffkorken verschlossenen Flasche erreicht werden kann.

Neben dem Verfahren zur Herstellung eines Holzpartikel enthaltenden Kunststoffkorkens schlägt die vorliegende Erfindung außerdem einen Holzpartikel enthaltenden Kunststoffkorken an sich vor. Der erfindungsgemäße Kunststoffkorken weist Holzpartikel in Form einer Vielzahl der geometrisch flachen Holzpartikelplättchen auf, von denen wenigstens einige zumindest teilweise an der Oberfläche des Kunststoffkorkens sichtbar sind.

Der erfindungsgemäße Kunststoffkorken kann aus künstlichen Kunststoffen wie Polyethylen, Polypropylen und ähnlichem hergestellt werden. Als besonders vorteilhaft hat sich die Herstellung des erfindungsgemäßen Kunststoffkorkens zumindest teilweise, bevorzugt vollständig, aus einem Kunststoff aus einem oder mehreren nachwachsenden Rohstoffen, sogenanntem Biokunststoff, erwiesen. Störende Einflüsse auf den Geruch oder Geschmack des Weins durch künstliche Kunststoffe können dadurch vermindert oder ausgeschlossen werden.

Als Hölzer für die Holzpartikelplättchen kommen Eiche, Buche, Esche, Kastanie, Kirsche oder Nussbaum in Betracht. Vorzugsweise werden für die Herstellung einer Charge erfindungsgemäßer Kunststoffkorken der Holzart nach sortenreine Holzpartikelplättchen aus einer einzigen Holzart verwendet. Bei Bedarf können zur Erzielung spezieller Effekte bei der Behandlung von Weinfehlern und/oder bei der Aromatisierung des Weins Holzpartikelplättchen aus zwei oder mehr verschiedenen Holzarten gemischt werden. Ein und derselbe Kunststoffkorken enthält dann Holzpartikelplättchen aus zwei oder mehr verschiedenen Holzarten.

### c) Ausführungsbeispiel

Ein Ausführungsbeispiel wird nachfolgend beispielhaft anhand der beigefügten Zeichnungen beschrieben. Es zeigen:
- Fig. 1:: Eine perspektivische Ansicht eines Ausführungsbeispiels des erfindungsgemäßen Kunststoffkorkens;
- Fig. 2:: eine Ansicht des in Fig. 1 gezeigten Kunststoffkorkens von oben;
- Fig. 3:: eine Schnittansicht des in Fig. 1 gezeigten Kunststoffkorkens, wobei der Schnitt durch dessen Längsachse verläuft; und
- Fig. 4:: die vergrößerte Einzelheit A aus der Schnittansicht gemäß Fig. 3.

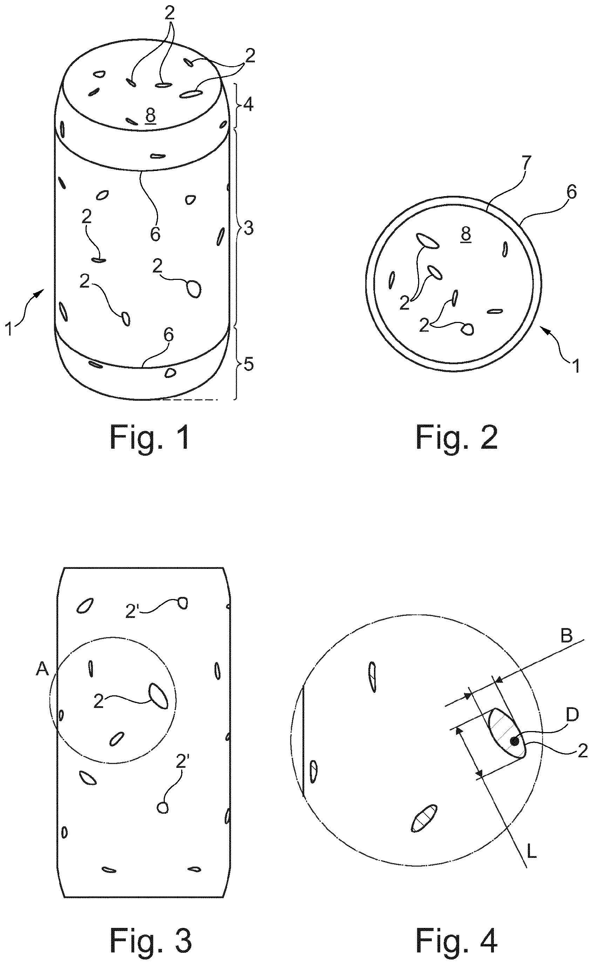

Fig. 1 zeigt eine perspektivische Ansicht des Ausführungsbeispiels des erfindungsgemäßen Kunststoffkorkens 1. Er weist dieselbe Form auf wie herkömmliche Kunststoffkorken. An einem zylindrischen Abschnitt 3 schließt sich oben und unten jeweils ein sich verjüngender Abschnitt 4 bzw. 5 an, der jeweils die obere bzw. untere Stirnfläche des Kunststoffkorkens 1 aufweist. Der Übergang zwischen dem zylindrischen Abschnitt 3 und dem sich verjüngenden Abschnitt 4 bzw. 5 ist jeweils durch eine kreisförmige Übergangskante 6 gekennzeichnet.

In Fig. 2 ist eine Aufsicht auf den in Fig. 1 gezeigten Kunststoffkorken 1 zu erkennen. Innerhalb der Übergangskante 6 liegt die Begrenzungskante 7, die eine Stirnfläche 8 des oberen sich verjüngenden Abschnitts 4 begrenzt.

In den Fig. 1 und 2 ist auch eine Vielzahl geometrisch flacher Holzpartikelplättchen 2 dargestellt. Der Kunststoffkorken 1 wurde durch an sich bekanntes Spritzgießen hergestellt. Als Kunststoffrohmaterial diente schüttfähiges Kunststoffgranulat, welches im Rahmen des Spritzgießprozesses zu einer spritzgießfähigen Kunststoffmasse geschmolzen wurde. Die Verteilung der Holzpartikelplättchen 2 in dem Kunststoffkorken 1 ergibt sich zufällig aus der Vermischung der flachen Holzpartikelplättchen 2 mit dem Kunststoffgranulat. Es ergibt sich an dem fertigen Kunststoffkorken 1 eine Oberflächenstruktur und -optik, die derjenigen eines Naturkorkens ähnelt.

Verschließt der Kunststoffkorken 1 eine Weinflasche derart, dass seine Stirnseite 8 dem Flascheninnenraum zugewandt ist, so können zumindest die in der Stirnfläche 8 des Abschnitts 4 sichtbaren Holzpartikelplättchen 2 in Kontakt mit dem Wein gelangen, der sich in der mit dem Kunststoffkorken 1 verschlossenen Flasche befindet. Dadurch erfolgt die erfindungsgemäß gewünschte Behebung von Weinfehlern und/oder Aromatisierung des Weines bei liegender Flaschenlagerung.

Fig. 3 zeigt eine Schnittansicht durch den in Fig. 1 dargestellten Kunststoffkorken 1. Zur Verdeutlichung der Geometrie der Holzpartikelplättchen 2 wurde in Fig. 4 die in Fig. 3 gezeigte Einzelheit A vergrößert dargestellt.

Das in Fig. 4 mit Schraffur und Bemaßung gezeigte Holzpartikelplättchen 2 liegt in der Schnitt- bzw. Zeichenebene. Es weist eine maximale Länge L = 1,0-5,0 mm, eine maximale Breite B = 0,5-2,0 mm sowie eine Dicke D = 0,2-0,5 mm auf. Entscheidend für die erfindungsgemäße Wirkung ist, dass die Holzpartikelplättchen 2 eine plattenartige oder flache Geometrie aufweisen. Die Kontur in der Aufsicht auf das Holzpartikelplättchen 2 gemäß Fig. 4 kann hingegen verschiedene und durch den Zufall geprägte Geometrien aufweisen. In Fig. 4 sind beispielsweise in der Aufsicht längliche Holzpartikelplättchen 2 gezeigt. In Fig. 3 sind hingegen auch Holzpartikelplättchen 2' zu erkennen, die in der Aufsicht eine eher dreieckige oder runde Geometrie aufweisen.

### BEZUGSZEICHENLISTE

- 1: Kunststoffkorken
- 2,2': Holzpartikelplättchen
- 3: zylindrischer Abschnitt
- 4,5: sich verjüngende Abschnitte
- 6: Übergangskante
- 7: Begrenzungskante
- 8: Stirnfläche

- B: Breite
- D: Dicke
- L: Länge

## Patentansprüche

1. Verfahren zur Herstellung eines Holzpartikel (2) enthaltenden Kunststoffkorkens (1) aus einer Kunststoffmasse, die durch Schmelzen eines Kunststoffrohmaterials gewonnen wird, wobei das Verfahren den Schritt des Formens des Kunststoffkorkens (1) aus der Kunststoffmasse mittels Spritzgießen oder Extrudieren umfasst,
**dadurch gekennzeichnet,dass**
das Kunststoffrohmaterial oder die Kunststoffmasse vor dem Formen des Kunststoffkorkens (1) mit die Holzpartikel bildenden flachen Holzpartikelplättchen (2) vermischt wird.

2. Verfahren nach Anspruch 1,
**dadurch gekennzeichnet, dass**
die flachen Holzpartikelplättchen (2) eine Länge (L), eine Breite (B) und eine Dicke (D) aufweisen, wobei die Dicke (D) 50% oder weniger, vorzugsweise 25% oder weniger, der kleineren der beiden Abmessungen beträgt, die von der Länge (L) und der Breite (B) gebildet werden.

3. Verfahren nach Anspruch 1,
**dadurch gekennzeichnet, dass**
die flachen Holzpartikelplättchen (2) eine Länge (L) von 1,0 bis 5,0 mm, eine Breite (B) von 0,5 bis 2,0 mm und eine Dicke (D) von 0,2 bis 0,5 mm aufweisen.

4. Verfahren nach einem der vorangehenden Ansprüche,
**dadurch gekennzeichnet, dass**
die flachen Holzpartikelplättchen (2) dem Kunststoffrohmaterial oder der Kunststoffmasse derart beigemischt werden, dass sie 5 bis 70 Volumen %, vorzugsweise 30 bis 50 Volumen %, des fertigen Kunststoffkorkens (1) ausmachen.

5. Verfahren nach einem der vorangehenden Ansprüche,
**dadurch gekennzeichnet, dass**
die flachen Holzpartikelplättchen (2) vor dem Vermischen mit dem Kunststoffrohmaterial oder der Kunststoffmasse entfeuchtet werden.

6. Verfahren nach Anspruch 5,
**dadurch gekennzeichnet, dass**
das Entfeuchten durch Pressen der flachen Holzpartikelplättchen (2) erfolgt.

7. Verfahren nach Anspruch 5 oder 6,
**dadurch gekennzeichnet, dass**
das Entfeuchten durch Wärmebehandlung der flachen Holzpartikelplättchen (2) erfolgt.

8. Verfahren nach Anspruch 7,
**dadurch gekennzeichnet, dass**
die Wärmebehandlung durch Erhitzen der flachen Holzpartikelplättchen (2) in einem Ofen erfolgt, der 140°C bis 480°C, vorzugsweise 160°C bis 200°C, heiße Luft enthält, so dass die flachen Holzpartikelplättchen (2) geröstet werden.

9. Verfahren nach einem der vorangehenden Ansprüche,
**dadurch gekennzeichnet, dass**
das Kunststoffrohmaterial zumindest teilweise aus einem Kunststoff aus wenigstens einem nachwachsenden Rohstoff besteht.

10. Kunststoffkorken (1) enthaltend Holzpartikel (2),
**dadurch gekennzeichnet, dass**
es sich bei den Holzpartikeln um flache Holzpartikelplättchen (2) handelt, die teilweise an der Oberfläche des Kunststoffkorkens (1) sichtbar sind.

11. Kunststoffkorken (1) nach Anspruch 10,
**dadurch gekennzeichnet, dass**
die flachen Holzpartikelplättchen (2) eine Länge (L), eine Breite (B) und eine Dicke (D) aufweisen, wobei die Dicke (D) 50% oder weniger, vorzugsweise 25% oder weniger, der kleineren der beiden Abmessungen beträgt, die von der Länge (L) und der Breite (B) gebildet werden.

12. Kunststoffkorken (1) nach Anspruch 10,
**dadurch gekennzeichnet, dass**
die flachen Holzpartikelplättchen (2) eine Länge (L) von 1,0 bis 5,0 mm, eine Breite (B) von 0,5 bis 2,0 mm und eine Dicke (D) von 0,2 bis 0,5 mm aufweisen.

13. Kunststoffkorken (1) nach einem der vorangehenden Ansprüche 10 bis 12,
**dadurch gekennzeichnet, dass**
die flachen Holzpartikelplättchen (2) 5 bis 70 Volumen %, vorzugsweise 30 bis 50 Volumen %, des fertigen Kunststoffkorkens (1) ausmachen.

14. Kunststoffkorken (1) nach einem der vorangehenden Ansprüche 10 bis 13,
**dadurch gekennzeichnet, dass**
zumindest die an der Oberfläche des Kunststoffkorkens (1) sichtbaren Bereiche der flachen Holzpartikelplättchen (2) durch Wärmebehandlung angeröstet sind.

15. Kunststoffkorken (1) nach einem der vorangehenden Ansprüche 10 bis 14,
**dadurch gekennzeichnet, dass**
der Kunststoffkorken zumindest teilweise aus einem Kunststoff aus wenigstens einem nachwachsenden Rohstoff besteht.

## Claims

1. A method for manufacturing a plastic cork (1) containing wood particles (2), from a plastic mass which is obtained by melting a plastic raw material, wherein the method comprises the step of shaping the plastic cork (1) from the plastic mass by means of injection moulding or extrusion, **characterised in that** the plastic raw material or the plastic mass is mixed with flat wood particle platelets (2) forming the wood particles prior to shaping the plastic cork (1).

2. The method according to claim 1, **characterised in that** the flat wood particle platelets (2) comprise a length (L), a width (B) and a thickness (D), wherein the thickness (D) is 50% or less, preferably 25% or less of the smaller of the two dimensions, which are formed by the length (L) and the width (B).

3. The method according to claim 1, **characterised in that** the flat wood particle platelets (2) comprise a length (L) of 1.0 to 5.0 mm, a width (B) of 0.5 to 2.0 mm and a thickness (D) of 0.2 to 0.5 mm.

4. The method according to any one of the preceding claims, **characterised in that** the flat wood particle platelets (2) are mixed with the plastic raw material or the plastic mass such that they account for 5 to 70 percent by volume, preferably 30 to 50 percent by volume of the finished plastic cork (1).

5. The method according to any one of the preceding claims, **characterised in that** the flat wood particle platelets (2) are dehumidified prior to mixing with the plastic raw material or the plastic mass.

6. The method according to claim 5, **characterised in that** dehumidification takes place by pressing the flat wood particle platelets (2).

7. The method according to claim 5 or 6, **characterised in that** dehumidification takes place by heat-treating the flat wood particle platelets (2).

8. The method according to claim 7, **characterised in that** the heat treatment takes place by heating the flat wood particle platelets (2) in a furnace which contains hot air at 140°C to 480°C, preferably 160°C to 200°C such that the flat wood particle platelets (2) are roasted.

9. The method according to any one of the preceding claims, **characterised in that** the plastic raw material consists at least partially of a plastic made of at least one renewable raw material.

10. A plastic cork (1) containing wood particles (2), **characterised in that** the wood particles are flat wood particle platelets (2) which are partially visible on the surface of the plastic cork (1).

11. The plastic cork (1) according to claim 10, **characterised in that** the flat wood particle platelets (2) comprise a length (L), a width (B) and a thickness (D), wherein the thickness (D) is 50% or less, preferably 25% or less of the smaller of the two dimensions, which are formed by the length (L) and the width (B).

12. The plastic cork (1) according to claim 10, **characterised in that** the flat wood particle platelets (2) comprise a length (L) of 1.0 to 5.0 mm, a width (B) of 0.5 to 2.0 mm and a thickness (D) of 0.2 to 0.5 mm.

13. The plastic cork (1) according to any one of the preceding claims 10 to 12, **characterised in that** the flat wood particle platelets (2) account for 5 to 70 percent by volume, preferably 30 to 50 percent by volume of the finished plastic cork (1).

14. The plastic cork (1) according to any one of the preceding claims 10 to 13, **characterised in that** at least the areas of the flat wood particle platelets (2) visible on the surface of the plastic cork (1) are roasted by heat treatment.

15. The plastic cork (1) according to any one of the preceding claims 10 to 14, **characterised in that** the plastic cork consists at least partially of a plastic made of at least one renewable raw material.

## Revendications

1. Procédé de fabrication d'un bouchon synthétique (1) contenant des particules de bois (2), fait d'une masse de matière plastique, obtenue en faisant fondre une matière première plastique, le procédé comprenant l'étape de moulage du bouchon synthétique (1) de la masse de matière plastique par moulage par injection ou par extrusion,
**caractérisé en ce que**
la matière première plastique ou la masse de matière plastique est mélangée avant le moulage du bouchon synthétique (1) avec des petites plaquettes de bois plates (2) formant les particules de bois.

2. Procédé selon la revendication 1,
**caractérisé en ce que**
les petites plaquettes de bois plates (2) ont une longueur (L), une largeur (B) et une épaisseur (D), l'épaisseur (D) étant de 50% ou moins, de préférence 25% ou moins de la plus petite des deux dimensions formées par la longueur (L) et la largeur (B).

3. Procédé selon la revendication 1,
**caractérisé en ce que**
les petites plaquettes de bois plates (2) ont une longueur (L) comprise entre 1,0 et 5,0 mm, une largeur (B) comprise entre 0,5 et 2,0 mm et une épaisseur (D) comprise entre 0,2 et 0,5 mm.

4. Procédé selon une des revendications précédentes,
**caractérisé en ce que**
les petites plaquettes de bois plates (2) sont mélangées à la matière première plastique ou à la masse de matière plastique de sorte qu'elles représentent 5 à 70 % en volume, de préférence 30 à 50 % en volume du bouchon synthétique (1) fini.

5. Procédé selon une des revendications précédentes,
**caractérisé en ce que**
les petites plaquettes de bois plates (2) sont séchées avant d'être mélangées avec la matière première plastique ou la masse de matière plastique.

6. Procédé selon la revendication 5,
**caractérisé en ce que**
le séchage est réalisé par pressurage des petites plaquettes de bois plates (2).

7. Procédé selon la revendication 5 ou 6,
**caractérisé en ce que**
le séchage est réalisé par un traitement thermique des petites plaquettes de bois plates (2).

8. Procédé selon la revendication 7,
**caractérisé en ce que**
le traitement thermique est réalisé en chauffant les petites plaquettes de bois plates (2) dans un four comprenant de l'air chauffé à une température comprise entre 140°C et 480°C, de préférence entre 160°C et 200°C, de sorte que les petites plaquettes de bois plates (2) sont grillées.

9. Procédé selon une des revendications précédentes,
**caractérisé en ce que**
la matière première plastique est formée au moins en partie par une matière plastique obtenue d'une matière première renouvelable.

10. Bouchon synthétique (1) contenant des particules de bois (2),
**caractérisé en ce que**
les particules de bois sont des petites plaquettes de bois plates (2),
partiellement visibles à la surface du bouchon synthétique (1).

11. Bouchon synthétique (1) selon la revendication 10,
**caractérisé en ce que**
les petites plaquettes de bois plates (2) ont une longueur (L), une largeur (B) et une épaisseur (D), l'épaisseur (D) étant de 50% ou moins, de préférence 25% ou moins de la plus petite des deux dimensions formées par la longueur (L) et la largeur (B).

12. Bouchon synthétique (1) selon la revendication 10,
**caractérisé en ce que**
les petites plaquettes de bois plates (2) ont une longueur (L) comprise entre 1,0 et 5,0 mm, une largeur (B) comprise entre 0,5 et 2,0 mm et une épaisseur (D) comprise entre 0,2 et 0,5 mm.

13. Bouchon synthétique (1) selon une des revendications précédentes 10 à 12,
**caractérisé en ce que**
les petites plaquettes de bois plates (2) représentent 5 à 70 % en volume, de préférence 30 à 50 % en volume du bouchon synthétique (1) fini.

14. Bouchon synthétique (1) selon une des revendications précédentes 10 à 13,
**caractérisé en ce que**
au moins les zones des petites plaquettes de bois plates (2) visibles à la surface du bouchon synthétique (1) sont grillées par traitement thermique.

15. Bouchon synthétique (1) selon une des revendications précédentes 10 à 14,
**caractérisé en ce que**
le bouchon synthétique est au moins en partie fabriqué d'une matière plastique obtenue d'au moins une matière première renouvelable.
